# EUROPEAN PATENT SPECIFICATION

(11) **EP 1 491 748 B1**
(45) Date of publication and mention of the grant of the patent: **10.06.2009**
(21) Application number: 04014986.6
(22) Date of filing: 25.06.2004
(51) Int. Cl.: F02D 41/00, F02D 41/02, F02D 41/14

(54) **Control apparatus of internal combustion engine with turbocharger**
Steuerung für eine Brennkraftmaschine mit Turbolader
Dispositf de contrôle pour un moteur à combustion interne avec turbocompresseur

(30) Priority: 27.06.2003 JP 2003184238
(43) Date of publication of application: 29.12.2004
(73) Proprietor: Toyota Jidosha Kabushiki Kaisha, Toyota-shi, Aichi-ken, 471-8571 (JP)
(72) Inventor: Kotani, Takeshi, Toyota-shi Aichi-ken 471-8571 (JP)
(74) Representative: TBK-Patent

(56) References cited:
- EP-A- 1 103 711
- EP-A- 1 344 906
- DE-A1- 3 909 932
- DE-A1- 3 929 303
- PATENT ABSTRACTS OF JAPAN vol. 012, no. 384 (M-753), 13 October 1988 (1988-10-13) & JP 63 134810 A (ISUZU MOTORS LTD), 7 June 1988 (1988-06-07)

## Description

### TECHNICAL FIELD

The present invention relates to a control apparatus of an internal combustion engine provided with a turbocharger for supercharging intake air by utilizing exhaust gas energy.

### BACKGROUND ART

In an internal combustion engine which is provided with an exhaust gas turbine of an exhaust gas turbocharger and a catalyst in an exhaust gas passage, and is provided with a bypass passage introducing an exhaust gas to the catalyst while bypassing the exhaust gas turbine, and with a bypass valve for controlling an exhaust gas flow rate in the bypass passage, there has been proposed a technique in which the exhaust gas is introduced from a part of cylinders through the bypass passage to the catalyst at a time of warming up the catalyst, thereby intending an early activation of the catalyst (refer to JP 11-148339 A. In addition, there are publications of JP H06-294318 A, JP H02-286817 A and JP 2001-107722 A as documents relevant to the present invention.

In the internal combustion engine provided with the turbocharger for supercharging the intake air by utilizing the exhaust gas energy, in the case that the flow rate of the exhaust gas introduced to the turbocharger is changed by operating the bypass valve, an exhaust gas energy amount which the turbocharger recovers is changed according to the change of the flow rate, and a supercharging pressure of the intake air is also changed. The change in the supercharging pressure exerts an influence to a torque of the internal combustion engine, and changes an output of the internal combustion engine.

However, since the prior art does not take the output change of the internal combustion engine at a time of operating the bypass valve into consideration, there is generated a problem that a drivability is deteriorated in correspondence to the output change of the internal combustion engine.

Further, besides the catalyst, a preferable temperature range exists, for example, in a particulate filter for trapping particulate matters or an oxygen concentration sensor to be used for detecting an air fuel ratio. Accordingly, the same problem is generated by operating an amount of the exhaust gas energy recovered by the turbocharger for controlling the temperatures.

A further prior art document EP-A-1 344 906 shows an exhaust emission control apparatus according to the precharacterizing portion of claim 1. In this apparatus, the temperature of the exhaust gas entering a filter is controlled by controlling a turbocharger.

A further prior art document DE 39 29 303 A1 discloses an electronic control means can be used to control an engine having a turbocharger. The exhaust gas temperature is controlled on the basis of engine data like rotational speed.

### DISCLOSURE OF THE INVENTION

Accordingly, an object of the present invention is to provide a control apparatus of an internal combustion engine with a turbocharger, which can stabilize an output of the internal combustion engine while changing an amount of exhaust gas energy recovered by the turbocharger in correspondence to a temperature adjustment state of a subject to be adjusted a temperature such as a catalyst or the arrange tin an exhaust gas passage in a downstream side of the turbocharger.

To achieve the above object, according to the present invention, there is provided a control apparatus comprising the features of claim 1. Further developments are stated in the further claims.

According to the control apparatus of the present invention, in the case that the output of the internal combustion engine is going to be changed due to the adjustment of the recovered energy amount of the turbocharger, the output adjusting device adjusts the output in correspondence to the adjustment so as to inhibit the change. Accordingly, it is possible to stabilize the output of the internal combustion engine.

In the present invention, the temperature adj usted subj ect includes various devices which are arranged in the exhaust gas passage and require a temperature adjustment, such as an oxygen concentration sensor and a catalyst, which exert a function in a predetermined temperature range, a particulate filter and an occlusion-reduction type NOx catalyst in which a function is reproduced by heating, and the like. As the recovered energy adjusting device, it is possible to apply various devices including a device capable of changing a flow rate or a flow speed of the exhaust gas introduced to the exhaust gas turbine of the turbocharger so as to adjust the amount of the recovered energy and a device capable of changing a load applied to a rotating shaft of the turbocharger, such as a bypass passage for bypassing the exhaust gas flowing into the exhaust gas turbine of the turbocharger and a bypass valve for adjusting the flow rate of the exhaust gas passing through the bypass passage, a variable nozzle for changing a cross sectional area of an exhaust gas flow inlet of the exhaust gas turbocharger so as to change a flow speed of the exhaust gas introduced to the exhaust gas turbine, an operation connected to the rotating shaft of the turbocharger so as to function as an electric motor or a power generator in correspondence to an operational state of the internal combustion engine and generating an electric power on the basis of the exhaust gas energy recovered by the exhaust gas turbine, and the like.

In the present invention, a concept "compensation" means to change the output in a direction of canceling the change in the output of the internal combustion engine which is expected in correspondence to the adj ustment of the recovered energy amount, and includes completely canceling the output change, and reducing the change amount of the output.

In the control apparatus in accordance with the present invention, the output adjusting device may adjust the output of the internal combustion engine by changing a rotation speed of the internal combustion engine. The output of the internal combustion engine may be adjusted by changing either of a torque and the rotation speed of the internal combustion engine. The output of the internal combustion engine may be adjusted by changing either of a fuel amount and intake air amount supplied to the internal combustion engine, and may be adj usted by changing a working angle of a valve in the case of the internal combustion engine having a variable valve moving mechanism. Further, in the case that the output shaft of the internal combustion engine is connected to a transmission, the rotation speed of the internal combustion engine can be changed by adjusting a gear ratio of the transmission.

For example, in the case of heating the temperature adj usted subj ect, a high-temperature exhaust gas is fed to the temperature adjusted subject in a downstream side of the turbocharger by reducing the recovered energy amount of the turbocharger. In this case, since a supercharging pressure of the intake air is lowered and a torque of the internal combustion engine is urged to be lowered in correspondence to the reduction of the recovered energy amount, it is possible to compensate the reduction in the output by changing the rotation speed to a high rotation side. In the case that the rotation speed of the internal combustion engine is changed to the high rotation side, a retention time of the combustion gas within the cylinder becomes shorter, and an after burning tendency is generated, so that an exhaust gas loss is increased and an exhaust gas temperature is increased. Accordingly, it is possible to promote heating the temperature adj usted subj ect in correspondence to the increase of the exhaust gas temperature.

On the other hand, in the case of cooling the temperature adj usted subj ect, the recovered energy amount of the turbocharger is increased on the contrary to the case of heating. In this case, the torque of the internal combustion engine is urged to be increased. When changing the rotation speed to a low rotation side for compensating the increase in the torque, the exhaust gas loss is reduced, and the exhaust gas temperature is lowered. Accordingly, it is possible to promote cooling the temperature adjusted subject.

The control apparatus in accordance with the present invention may be provided with an exhaust gas purifying device in which a function is reproduced by being heated to a predetermined temperature or more as the temperature adjusted subject, the operation control device may reduce the recovered energy amount in the case of reproducing the function of the exhaust gas purifying device, and the output adjusting device may increase an output of the internal combustion engine so as to compensate the reduction in the output of the internal combustion engine which is expected in accordance with an adjustment for reducing the recovered energy amount which the operation control device executes at a time of reproducing the function of the exhaust gas purifying device. Since the reduction in the output of the internal combustion engine generated in the case of heating the exhaust gas purifying device is compensated by the output adj usting device as mentioned above, it is possible to stabilize the output of the internal combustion engine.

The control apparatus in accordance with the present invention may be provided with a temperature acquiring device for acquiring the temperature of the temperature adj usted subj ect, the operation control device may adjust the recovered energy amount on the basis of the temperature which is acquired by the temperature acquiring device, and the output adjusting device may adjust the output of the internal combustion engine so as to compensate the change in the output of the internal combustion engine which is expected in accordance with the adjustment of the recovered energy amount by the operation control device on the basis of the temperature acquiredby the temperature acquiring device. It is possible to prevent a superheating or a supercooling so as to maintain the temperature adjusted subject within a proper temperature range, by adjusting the recovered energy amount on the basis of the temperature acquired by the temperature acquiring device as mentioned above.

In the control apparatus in accordance with the present invention, the internal combustion engine may be provided with a bypass passage which connects an exhaust gas passage in an upstream side of the turbocharger to an exhaust gas passage in a downstream side of the turbocharger and in an upstream side of the temperature adjusted subject, and with a bypass valve which controls a flow rate of the exhaust gas passing through the bypass passage, and the operation control device may control an operation of the bypass valve so as to serve as the recovered energy amount adjusting device. It is possible to change the flow rate of the exhaust gas introduced to the turbocharger so as to adj ust the recovered energy amount, by arranging the bypass passage and adjusting the flow rate by means of the bypass valve as mentioned above.

### BRIEF DESCRIPTION OF THE DRAWINGS

FIG. 1 is a view showing a main portion of an internal combustion engine to which a control apparatus in accordance with the present invention is applied;
FIG. 2 is a flow chart showing a waste gate valve control routine executed by an ECU in FIG. 1;
FIG. 3 is a view showing an example of a change in an output and an exhaust gas temperature by setting a rotation speed and a torque of an internal combustion engine 1 to a parameter; and
FIG. 4 is a flow chart showing another waste gate valve control routine executed by the ECU in FIG. 1.

### BEST MODE FOR CARRYING OUT THE INVENTION

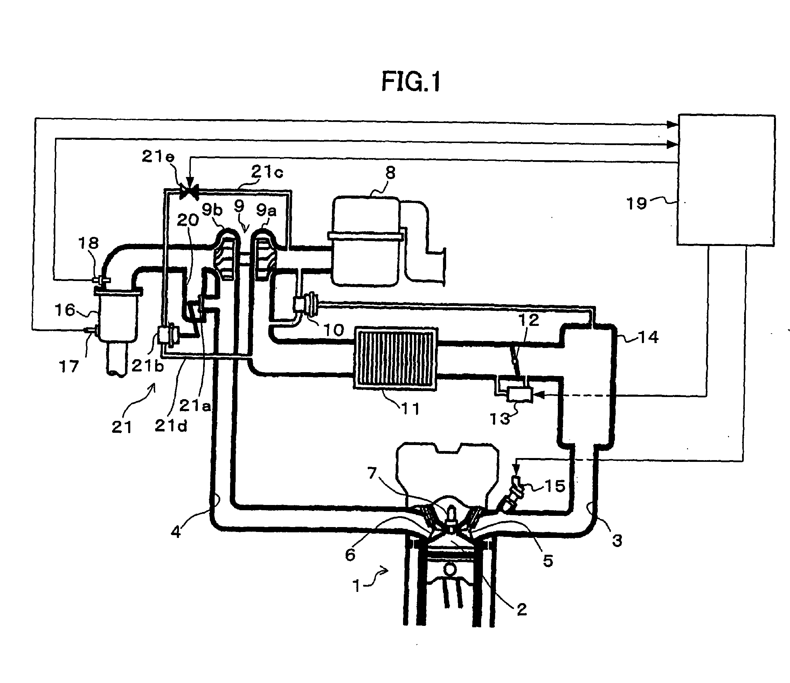

FIG. 1 shows a main portion of an internal combustion engine to which a control apparatus in accordance with the present invention is applied. An internal combustion engine 1 is structured as a four stroke spark ignition type gasoline engine which is used as a traveling power source of a motor vehicle. As is well known, the internal combustion engine 1 is provided with an intake passage 3 for taking intake air into a combustion chamber 2, an exhaust gas passage 4 for introducing an exhaust gas from the combustion chamber 2 to a predetermined exhausting position, an intake valve 5 and an exhaust gas valve 6 for opening and closing the passages 3 and 4 with respect to the combustion chamber 2, and an ignition plug 7 for igniting an air-fuel mixture introduced into the combustion chamber 2. The intake passage 3 is provided with an air filter 8 for filtering the intake air, a compressor 9a of a turbocharger 9 supercharging the intake air by utilizing exhaust gas energy, a supercharging pressure control valve 10 connecting an upstream side of the compressor 9a to the intake passage 3 in a downstream side in the case that the supercharging pressure is more than a predetermined pressure, an inter-cooler 11 cooling the intake air, a throttle valve 12 for adjusting an amount of the intake air, an idle speed control valve 13 arranged in parallel to the throttle valve 12 and adjusting an amount of the intake air bypassing the throttle valve 12, a surge tank 14 inhibiting the intake air frompulsating, and an injector 15 supplying the fuel to the intake air for preparing the air-fuel mixture. The exhaust gas passage 4 is provided with a turbine 9b of the turbocharger 9, a catalyst 16 serving as an exhaust gas purifying device, a temperature sensor 17 serving as a temperature acquiring device for outputting a signal in correspondence to a temperature of the catalyst 16, and an air fuel ratio sensor 18 outputting a signal in correspondence to an air fuel ration of the exhaust gas.

An operating state of the internal combustion engine 1 is controlled by an engine control unit (ECU) 19. The ECU 19 is structured as a computer obtained by combining peripheral devices such as a microprocessor and ROM, RAM and the like which are required for operatingthemicroprocessor. The ECU 19 carries out an arithmetical operation, for example, of a fuel injection amount on the basis of the operating state of the internal combustion engine 1, and controls an operation of the injector 15 such that the arithmetically operated amount of fuel is supplied at a predetermined timing.

The exhaust gas passage 4 is provided with a bypass passage 20 connecting the exhaust gas passage 4 in an upstream side of the turbine 9b to the exhaust gas passage 4 in a downstream side of the turbine 9b and in an upstream side of the catalyst 16, and a waste gate valve 21 serving as a bypass valve controlling a flow rate of the exhaust gas passing through the bypass passage 20. The waste gate valve 21 is constituted by a valve body 21a and an actuator 21b driving the valve body 21a by utilizing a pressure of the intake air introduced into therein. The actuator 21b and the intake passage 3 in the upstream side and in the downstream side of the compressor 9a are connected by an intake air discharging passage 21c and an intake air introducing passage 21d. The intake air discharging passage 21c is provided with a pressure adjusting valve 21e connecting the actuator 21b to the intake passage 3 in the upstream side of the compressor 9a and shutting off the connection so as to adjust the pressure of the intake air introduced into the actuator 21b.

The actuator 21b operates the valve body 21a in correspondence to the pressure of the intake air introduced into the actuator 21b. For example, in the case that the pressure of the introduced intake air is high, the actuator 21b opens the valve body 21a so as to introduce the exhaust gas to the bypass passage 20, thereby restricting the output of the turbine 9b. On the other hand, in the case that the pressure of the introduced intake air is low, the actuator 21b closes the valve body 21a so as to flow all of the exhaust gas into the turbine 9b, thereby increasing the output of the turbine 9b. On the basis of the operation mentioned above, the waste gate valve 21 serves as a recovered energy amount adjusting device.

The pressure adjusting valve 21e can control the pressure of the intake air within the actuator 21b by being operated so as to open and close. For example, in the case that the pressure adjusting valve 21e is in an open state, the pressure adjusting valve 21e returns the intake air introduced into the actuator 21b to the intake passage 3, thereby lowering the pressure of the intake air within the actuator 21b. On the other hand, in the case that the pressure adjusting valve 21e is in a closed state, the actuator adjusting valve 21e shuts off the connection between the actuator 21b and the intake passage 3 so as to increase the pressure of the intake air within the actuator 21b.

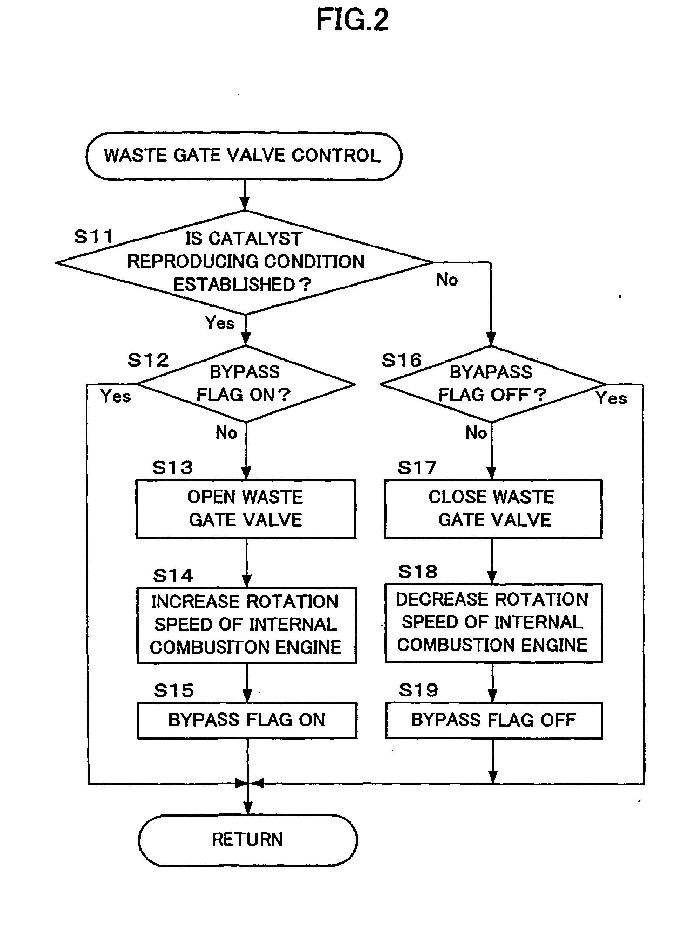

An operation of the pressure adjusting valve 21e is controlled by the ECU 19. FIG. 2 is a flow chart showing a waste gate valve control routine which the ECU 19 executes for controlling the pressure adjusting valve 21e. The ECU 19 serves as an operation control device by executing the routine in FIG. 2. Further, in the routine in FIG. 2, the ECU 19 controls, for example, a transmission (not shown) to a low speed gear side in correspondence to the operation of the pressure adjusting valve 21e, thereby changing the rotation speed of the internal combustion engine 1. In accordance with this control, the ECU 19 serves as an output adjusting device. The routine in FIG. 2 is executed repeatedly at a predetermined cycle during the operation of the internal combustion engine 1.

In the control routine in FIG. 2, the ECU 19 first determines in step S11 whether or not a reproducing condition for the catalyst 16 is established. For example, in the case that an occlusion-reduction type NOx catalyst is employed as the catalyst 16, since the catalyst 16 is poisoned by a sulfur content (S), the function thereof is reproduced by heating the catalyst 16. The condition executing the reproduction is determined by estimating an amount of the S flowing into the catalyst 16 based on an amount of the fuel supplied by the injector 15. Further, in the case that an accumulation of the estimated values is more than a predetermined value, it is determined that the reproducing condition is established. In this case, the accumulation of the estimated values is reset in the case that the function reproducing process is executed.

In the case that the reproducing condition is established, the ECU 19 goes to step S12 and determines whether or not a bypass flag for determining whether or not the valve body 21a is open is in an on state indicating the open. In the case that the ECU 19 determines that the bypass flag is in the on state, this time control routine is terminated. It is possible to show a state of the valve body 21a to the other control routines controlling the operation of the valve body 21a, by the bypass flag.

In the case that the ECU 19 determines that the bypass flag is not in the on state, the ECU 19 goes to step S13 and controls the operation of the pressure adjusting valve 21e so as to open the valve body 21a. In next step S14, the ECU 19 changes the transmission to a low speed gear side so as to compensate the reduction in the output of the internal combustion engine 1 expected by opening the valve body 21a, thereby increas ing the rotation speed of the internal combustion engine 1. In succeeding step S15, the ECU 19 sets the bypass flag to the on state, and thereafter terminates this time control routine.

In the case that the ECU 19 determines in step S11 that the reproducing condition is not established, the ECU 19 goes to step S16 and determines whether or not the bypass flag is in an off state. In the case that the ECU 19 determines that the bypass flag is in the off state, the ECU 19 terminates this time control routine. On the other hand, in the case that the ECU 19 determines that the bypass flag is not in the off state, the ECU 19 goes to step S17 and controls the operation of the pressure adjusting valve 21e so as to close the valve body 21a. In next step S18, the ECU 19 changes the transmission to a high speed gear side so as to compensate the increase in the output of the internal combustion engine 1 expected by closing the valve body 21a, thereby reducing the rotation speed of the internal combustion engine 1. In succeeding step S19, the ECU 19 sets the bypass flag to the off state, and thereafter finishes this time control routine.

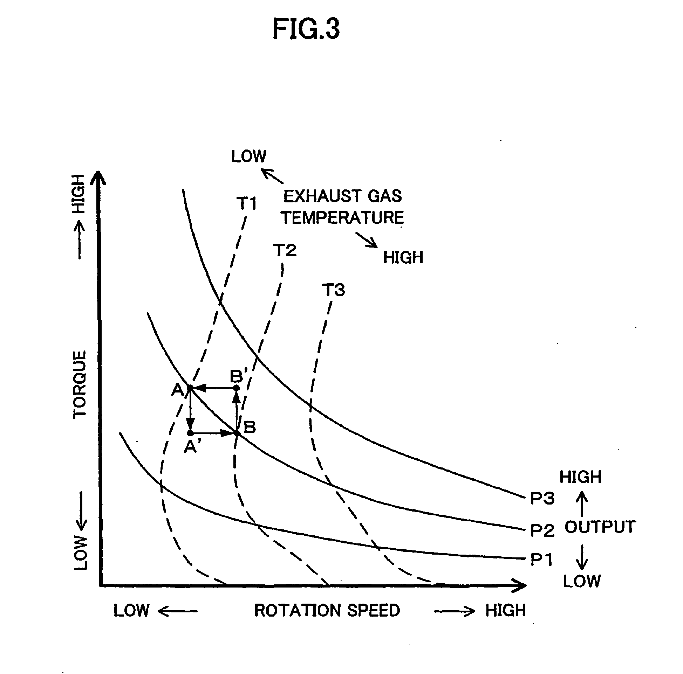

FIG. 3 shows an example of an output adjustment of the internal combustion engine 1 which the ECU 19 carries out in the case of operating the valve body 21a in accordance with the control routine in FIG. 2. FIG. 3 shows an example of a change in an output and an exhaust gas temperature in the case of setting the torque and the rotation speed of the internal combustion engine 1 to parameters. Reference symbols P1 to P3 in FIG. 3 denote constant output lines in the case of changing the torque and the rotation speed, and reference symbols T1 to T3 denote constant exhaust gas temperature lines in the case of changing the torque and the rotation speed, respectively.

In the case of opening the valve body 21a in the control routine in FIG. 2, the output is compensated by increasing the rotation speed of the internal combustion engine 1. For example, in the case that the internal combustion engine 1 is operated by the torque and the rotation speed (the operating state) at a point A in FIG. 3 before opening the valve body 21a, the torque of the internal combustion engine 1 is lowered on the basis of the opening of the valve body 21a in step 13 in FIG. 2, and it is expected that the internal combustion engine 1 will be changed to an operating state at a point A' in FIG. 3 in accordance with the reduction. Since the operating state is changed to a point P1, the output of the internal combustion engine 1 urged to be lowered. The ECU 19 increases the rotation speed of the internal combustion engine 1 for the purpose of compensating the reduction in the output in step S14, and changes the operating state to a point B in FIG. 3. The operating state of the internal combustion engine 1 is kept on the same constant output line P2 as that of the point A in correspondence to the increase in the rotation speed, and the reduction in the output can be inhibited. Further, as is apparent from FIG. 3, the exhaust gas temperature is increased in accordance with the increase in the rotation speed.

On the other hand, in the case of closing the valve body 21a in the control routine in FIG. 2, the output is compensated by reducing the rotation speed of the internal combustion engine 1. For example, in the case that the internal combustion engine 1 is operated in the operating state at the point B in FIG. 3 before closing the valve body 21a, the torque of the internal combustion engine 1 is increased in correspondence to the closing of the valve body 21a in step 17 in FIG. 2, and it is expected that the internal combustion engine 1 will be changed to an operating state at a point B' in FIG. 3 in accordance with the increase. Since the operating state is changed to a point P3, the output of the internal combustion engine 1 is urged to be increased. The ECU 19 reduces the rotation speed of the internal combustion engine 1 for the purpose of compensating the increase in the output in step S18, and changes the operating state to the point A in FIG. 3. The operating state of the internal combustion engine 1 is kept on the same constant output line P2 as that of the point B in accordance with the reduction in the rotation speed, and the increase in the output can be inhibited. Further, as is apparent from FIG. 3, the exhaust gas temperature is lowered in accordance with the reduction in the rotation speed.

As mentioned above, it is possible to suppress the change of the output of the internal combustion engine 1 which is expected in accordance with the operation of the valve body 21a, while operating the valve body 21a so as to adjust the temperature of the catalyst 16, by executing the control routine in FIG. 2. Further, since the output is adjustedby changing the rotation speed of the internal combustion engine 1, it is possible to change the exhaust gas temperature so as to quickly adjust the temperature of the catalyst 16.

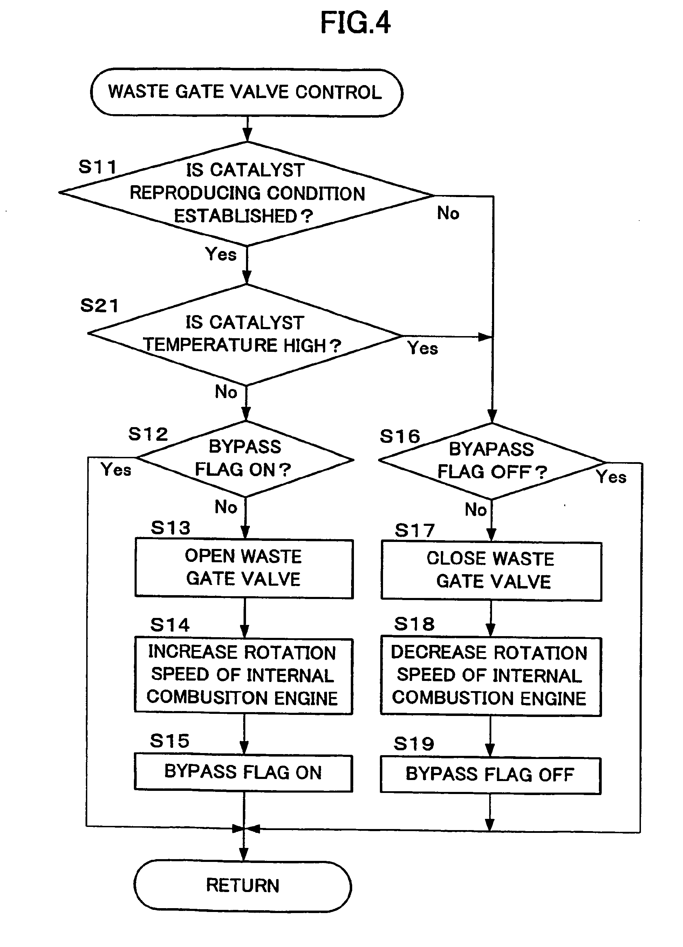

Next, a description will be given of another example of the control routine for serving the ECU 19 as the operation control device and the output adjusting device with reference to FIG. 4. The routine is also executed repeatedly at a predetermined cycle during the operation of the internal combustion engine 1. In this case, the same reference symbols are attached to the same processes as those in FIG. 2, and a description thereof will be omitted.

In the control routine in FIG. 4, in the case that the ECU 19 determines in step S11 that the reproducing condition is established, the ECU 19 goes to step S21 and determines whether or not the temperature of the catalyst 16 is high. Whether or not the temperature is high can be determined, for example, on the basis of whether or not the temperature acquired by the temperature sensor 17 is higher than a predetermined temperature. In the case that the ECU 19 determines that the temperature of the catalyst 16 is not high, the ECU 19 goes to step S12, and carries out the same process as that in FIG. 2. On the other hand, in the case that the ECU 19 determines that the temperature of the catalyst 16 is high or in the case that the ECU 19 determines in step S11 that the reproducing condition is not established, the ECU 19 goes to step S16 and thereunder carries out the same process as that in FIG. 2.

As mentioned above, it is possible to maintain the catalyst 16 in a proper temperature range so as to prevent the catalyst 16 from being deteriorated due to the superheat or the like, by controlling the operation of the valve body 21a on the basis of the temperature acquired by the temperature sensor 17.

The present invention is not limited to the embodiments mentioned above, and can be carried out in accordance with various aspects. For example, the internal combustion engine is not limited to the gasoline engine, and the present invention can be applied to a diesel engine. The exhaust gas purifying device is not limited to the catalyst, and it is possible to various devices such as a particulate filter or the like, which can reproduce its function by being heated.

A continuously variable transmission is preferably applied to the transmission in accordance with the present invention. Further, the rotation speed of the internal combustion engine can be also adjusted by changing the intake air amount or the fuel injection amount. Accordingly, the device for adjusting the rotation speedof the internal combustion engine is not limited to the transmission, and it is possible to utilize, for example, a throttle valve or an injector.

The control apparatus in accordance with the present invention can be applied to a so-called hybrid vehicle in which a motor generator serving as an electric motor and a power generator and the internal combustion engine are mounted as the power source.

As described above, in accordance with the present invention, since it is possible to compensate the change in the torque of the internal combustion engine which is generated in the case of changing the recovered energy amount of the turbocharger and adjusting the temperature of the temperature adjusted subject, by adjusting the output of the internal combustion engine, it is possible to stably maintain the output of the internal combustion engine. Further, since the output is adjusted by changing the rotation speed of the internal combustion engine, it is possible to change the exhaust gas temperature. Accordingly, it is possible to adjust the temperature of the temperature adjusted subject for a shorter time.

## Claims

1. A control apparatus to be applied to an internal combustion engine which is provided with a turbocharger (9) for supercharging intake air by utilizing exhaust gas energy, and a recovered energy amount adjusting device (21) for adjusting an energy amount recovered from the exhaust gas by the turbocharger, comprising:
an operation control device (19) for controlling an operation of the recovered energy amount adjusting device (21) in such a manner that the recovered energy amount is adjusted in correspondence to a temperature adjusting state of a temperature adjusted subject (16) arranged in an exhaust gas passage (4) in a downstream side of the turbocharger; and
an output adjusting device (19) for adjusting an output of the internal combustion engine so as to compensate for a change of an output of the internal combustion engine which is expected in accordance with an adjustment of the recovered energy in correspondence to the temperature adjustment state by the operation control device,
**characterized in that**
the output adjusting device adjusts the output of the internal combustion engine such that a relationship between torque and a rotation speed of the internal combustion engine is changed along a constant output line denoted in a graph which shows a change in the output in a case of the setting the torque and the rotation speed to parameters, thereby compensating for the change of the output.

2. The control apparatus of the internal combustion engine with the turbocharger according to claim 1, wherein the output adjusting device adjusts the output of the internal combustion engine by changing a rotation speed of the internal combustion engine.

3. The control apparatus of the internal combustion engine with the turbocharger according to claim 1 or 2 , wherein an exhaust gas purifying device (16) in which a function is reproduced by being heated to a predetermined temperature or more is provided as the temperature adjusted subject, the operation control device reduces the recovered energy amount in the case of reproducing the function of the exhaust gas purifying device, and the output adjusting device increases the output of the internal combustion engine so as to compensate the reduction in the output of the internal combustion engine which is expected in accordance with an adjustment for reducing the recovered energy amount which the operation control device executes at a time of reproducing the function of the exhaust gas purifying device.

4. The control apparatus of the internal combustion engine with the turbocharger according to claim 1 or 2, wherein the control apparatus is provided with a temperature acquiring device (17) for acquiring the temperature of the temperature adjusted subject, the operation control device adjusts the recovered energy amount on the basis of the temperature which is acquired by the temperature acquiring device, and the output adjusting device adjusts the output of the internal combustion engine so as to compensate the change in the output of the internal combustion engine which is expected in accordance with the adj ustment of the recovered energy amount by the operation control device on the basis of the temperature acquired by the temperature acquiring device.

5. The control apparatus of the internal combustion engine with the turbocharger.according to any one of claims 1 to 4, wherein the internal combustion engine is provided with a bypass passage (20) which connects the exhaust gas passage in an upstream side of the turbocharger to the exhaust gas passage in a downstream side of the turbocharger and in an upstream side of the temperature adjusted subject, and with a bypass valve (21) which controls a flow rate of the exhaust gas passing through the bypass passage, and the operation control device controls an operation of the bypass valve so as to serve as the recovered energy amount adjusting device.

## Patentansprüche

1. Steuergerät für eine Brennkraftmaschine, die mit einem Turbolader (9) zum Einlassluftaufladen unter Verwendung von Abgasenergie und einer Reguliervorrichtung (21) für eine Rückgewinnenergiemenge zum Regulieren einer Energiemenge, die durch den Turbolader aus dem Abgas rückgewonnen wird, mit:
einer Betriebssteuervorrichtung (19) zum Steuern eines Betriebs der Reguliervorrichtung (21) für die Rückgewinnenergiemenge auf eine derartige Art und Weise, dass die Rückgewinnenergiemenge in Übereinstimmung mit einem Temperaturregulierzustand eines temperaturregulierten Gegenstands (16) abgeglichen wird, der in einem Abgasdurchgang (4) auf einer stromabwärtigen Seite des Turboladers angeordnet ist; und
einer Ausgabereguliervorrichtung (19) zum Regulieren einer Ausgabe der Brennkraftmaschine, um eine Veränderung einer Ausgabe der Brennkraftmaschine auszugleichen, die in Übereinstimmung mit einer Regulierung der Rückgewinnenergie durch die Betriebssteuervorrichtung in Übereinstimmung mit dem Temperaturregulierzustand erwartet wird,
**dadurch gekennzeichnet, dass**
die Ausgabereguliervorrichtung die Ausgabe der Brennkraftmaschine derart reguliert, dass eine Beziehung zwischen einem Drehmoment und einer Drehzahl der Brennkraftmaschine entlang einer konstanten Ausgabelinie verändert wird, die durch einen Graphen angegeben wird, der eine Veränderung der Ausgabe in einem Fall des Festsetzens des Drehmoments und der Drehzahl auf Parameter zeigt, wodurch die Veränderung der Ausgabe ausgeglichen wird.

2. Steuergerät der Brennkraftmaschine mit dem Turbolader nach Anspruch 1, wobei die Ausgabereguliervorrichtung die Ausgabe der Brennkraftmaschine durch Verändern einer Drehzahl der Brennkraftmaschine reguliert.

3. Steuergerät der Brennkraftmaschine mit dem Turbolader nach Anspruch 1 oder 2, wobei eine Abgasreinigungsvorrichtung (16), deren Funktion durch Erhitzen auf eine vorbestimmte Temperatur oder mehr wiederhergestellt wird, als der temperaturregulierte Gegenstand vorgesehen ist, wobei die Betriebssteuervorrichtung die Rückgewinnenergiemenge in dem Fall des Wiederherstellens der Funktion der Abgasreinigungsvorrichtung verringert und die Ausgabereguliervorrichtung die Ausgabe der Brennkraftmaschine erhöht, um die Verringerung der Ausgabe der Brennkraftmaschine auszugleichen, die in Übereinstimmung mit einer Regulierung zum Verringern der Rückgewinnenergiemenge erwartet wird, den die Bebetriebssteuervorrichtung zu einer Zeit des Wiederherstellens der Funktion der Abgasreinigungsvorrichtung ausführt.

4. Steuergerät der Brennkraftmaschine mit dem Turbolader nach Anspruch 1 oder 2, wobei das Steuergerät mit einer Temperaturerfassungsvorrichtung (17) zum Erfassen der Temperatur des temperaturregulierten Gegenstands versehen ist, wobei die Betriebssteuervorrichtung die Rückgewinnenergiemenge basierend auf der Temperatur reguliert, die durch die Temperaturerfassungsvorrichtung erfasst wird, und wobei die Ausgabereguliervorrichtung die Ausgabe der Brennkraftmaschine reguliert, um die Veränderung der Ausgabe der Brennkraftmaschine auszugleichen, die in Übereinstimmung mit der Regulierung der Rückgewinnenergiemenge durch die Betriebssteuervorrichtung basierend auf der durch die Temperaturerfassungsvorrichtung erfassten Temperatur erwartet wird.

5. Steuergerät der Brennkraftmaschine mit dem Turbolader nach einem der Ansprüche 1 bis 4, wobei die Brennkraftmaschine mit einem Umgehungsdurchgang (20), der den Abgasdurchgang auf einer stromaufwärtigen Seite des Turboladers mit dem Abgasdurchgang auf einer stromabwärtigen Seite des Turboladers und auf einer stromaufwärtigen Seite des temperaturregulierten Gegenstands verbindet, und mit einem Umgehungsventil (21) versehen ist, das eine Strömungsrate des durch den Umgehungsdurchgang hindurchtretenden Abgases steuert, und wobei die Betriebssteuervorrichtung einen Betrieb des Umgehungsventils steuert, so dass dieses als die Rückgewinnenergiemengenreguliervorrichtung dient.

## Revendications

1. Dispositif de commande destiné à être appliqué à un moteur à combustion interne qui est pourvu d'un turbocompresseur (9) pour suralimenter l'air d'admission en utilisant l'énergie du gaz d'échappement, et un dispositif de réglage de quantité d'énergie récupérée (21) pour régler une quantité d'énergie récupérée depuis le gaz d'échappement par le turbocompresseur, comprenant :
un dispositif de commande de fonctionnement (19) pour commander un fonctionnement du dispositif de réglage de quantité d'énergie récupérée (21) de telle manière que la quantité d'énergie récupérée est réglée d'après un état de réglage de la température d'un sujet réglé en température (16) agencé dans un passage de gaz d'échappement (4) dans un côté aval du turbocompresseur ; et
un dispositif de réglage de rendement (19) pour régler un rendement du moteur à combustion interne de façon à compenser une modification d'un rendement du moteur à combustion interne qui est attendue selon un réglage de l'énergie récupérée d'après l'état de réglage de température par le dispositif de commande de fonctionnement,
**caractérisé en ce que**
le dispositif de réglage de rendement règle le rendement du moteur à combustion interne de telle manière qu'une relation entre le couple et une vitesse de rotation du moteur à combustion interne est modifiée le long d'une ligne de rendement constante montrée dans un graphe qui montre une modification du rendement dans le cas d'un réglage du couple et de la vitesse de rotation à des paramètres, compensant ainsi la modification de rendement.

2. Dispositif de commande du moteur à combustion interne avec le turbocompresseur selon la revendication 1, dans lequel le dispositif de réglage de rendement règle le rendement du moteur à combustion interne en modifiant une vitesse de rotation du moteur à combustion interne.

3. Dispositif de commande du moteur à combustion interne avec le turbocompresseur selon la revendication 1 ou 2, dans lequel un dispositif de purification de gaz d'échappement (16) dans lequel une fonction est reproduite par chauffage à une température prédéterminée ou plus est fourni comme le sujet réglé en température, le dispositif de commande de fonctionnement réduit la quantité d'énergie récupérée dans le cas d'une reproduction de la fonction du dispositif de purification de gaz d'échappement, et le dispositif de réglage de rendement augmente le rendement du moteur à combustion interne de façon à compenser la réduction du rendement du moteur à combustion interne qui est attendue du fait d'un réglage pour réduire la quantité d'énergie récupérée que le dispositif de commande de fonctionnement exécute à un moment de reproduction de la fonction du dispositif de purification de gaz d'échappement.

4. Dispositif de commande du moteur à combustion interne avec le turbocompresseur selon la revendication 1 ou 2, dans lequel le dispositif de commande est pourvu d'un dispositif d'acquisition de température (17) pour acquérir la température du sujet réglé en température, le dispositif de commande de fonctionnement règle la quantité d'énergie récupérée d'après la température qui est acquise par le dispositif d'acquisition de température, et le dispositif de réglage de rendement règle le rendement du moteur à combustion interne de façon à compenser la modification du rendement du moteur à combustion interne qui est attendue du fait du réglage de la quantité d'énergie récupérée par le dispositif de commande de fonctionnement d'après la température acquise par le dispositif d'acquisition de température.

5. Dispositif de commande du moteur à combustion interne avec le turbocompresseur selon l'une quelconque des revendications 1 à 4, dans lequel le moteur à combustion interne est pourvu d'un passage de dérivation (20) qui relie le passage de gaz d'échappement d'un côté amont du turbocompresseur vers le passage de gaz d'échappement d'un côté aval du turbocompresseur et d'un côté amont du sujet réglé en température, et avec une valve de dérivation (21) qui commande un débit d'écoulement du gaz d'échappement passant à travers le passage de dérivation, et le dispositif de commande de fonctionnement commande un fonctionnement de la valve de dérivation de façon à servir de dispositif de réglage de quantité d'énergie récupérée.
